# EUROPEAN PATENT SPECIFICATION

(11) **EP 2 403 275 B1**
(45) Date of publication and mention of the grant of the patent: **06.07.2016**
(21) Application number: 11179978.9
(22) Date of filing: 10.10.2007
(51) Int. Cl.: H04W 4/00, H04W 4/06, H04L 29/08

(54) **Telecommunications chip card and method thereof**
Telekommunikationschipkarte und Verfahren dafür
Carte à puce de télécommunications et procédé correspondant

(43) Date of publication of application: 04.01.2012
(62) Divisional of application: 07118165.5
(73) Proprietor: Morpho Cards GmbH, 24220 Flintbek (DE)
(72) Inventor: Cricco, Rémy, 13180 Gignac La Nerthe (FR)
(74) Representative: Richardt Patentanwälte PartG mbB

(56) References cited:
- WO-A-99/35771
- WO-A1-2007/052109
- "Smart Cards; Application invocation API by a UICC Webserver for the Java Card platform; (Release 7); ETSI TS 102 588", ETSI STANDARDS, LIS, SOPHIA ANTIPOLIS CEDEX, FRANCE, vol. SCP-T, no. V2.0.0, 1 May 2007 (2007-05-01), XP014039512, ISSN: 0000-0001
- SAGEM ORGA: "The UICC as a Mobile TV service enabler", A SAGEM ORGA WHITE PAPER, September 2007 (2007-09), pages 1-16, XP002663699, Sagem Orga SAFRAN Group

## Description

### Technical field

The invention relates to a telecommunications chip card for carrying personalization data, to a handset and to a method thereof.

### Background and related art

In network technologies such as GSM and UMTS, a telecommunications chip card is used in mobile terminals, ensuring the integrity and security of the subscriber's identity data. In UMTS and GSM it may be called the UICC or UMTS Integrated Circuit Card.

Mobile TV Is known as the technology that brings TV services to mobile devices. Depending on the receiver, it may combine the services of a mobile phone with television content. One way of delivering mobile TV is using a one-way dedicated broadcast network. These include digital video broadcasting-handheld (DVB-H), the digital video broadcast satellite service to handsets (DVB-SH), digital multimedia broadcasting (DMB), TDtv (based on TD-CDMA), 1seg (based on ISDB-T), DAB and MediaFLO.

WO 99/35771 discloses a telecommunication method comprising the integration of programme-related digital data into a TV or radio programme and transmission of said programme, the reception and playback of the programme by a mobile telephone combined with a TV or radio receiving system, where the receiving system comprises a chip card reader into which the user of the receiving system can insert a SIM card to identify himself.

ETSI TS 102 588 (2007-05-01) defines an API that allows a UICC based Smartcard WebServer defined by the OMA to forward HTTP requests to an applet and to receive response from the applet and it also defines the applet to register and unregister from the Smartcard WebServer.

WO 2007/052109 A1 describes apparatuses and methods for transmitting and receiving ESG fragments containing identification information. In one example, the identification identifies a mobile operator. For example, the identification information may include a Mobile Network Code (MNC), Mobile Country Code (MCC), or name corresponding to the mobile operator. In another example, the identification information may also contain a web address corresponding to a web page associated with the mobile operator.

"The UICC as a Mobile TV service enabler" (Sagem Orga White Paper, 2007-09, pages 1-16; Sagem Orga SAFRAN Group) describes that an MNO can define its own set of business models to increase revenue thanks to Pay Per View, subscription, Pay Per Time, Floating preview etc..

One of the drawbacks of using a unidirectional dedicated broadcast network, such as terrestrial transmissions, is the limitation of interactivity services with an easy implementation and with the possibility of deployment in a wide variety of mobile devices.

There is therefore a need for a telecommunications chip card or UICC for carrying personalization data, an improved handset and a method adapted for performing in accordance with the invention.

### Summary of the invention

The present invention provides a telecommunications chip card for carrying personalization data for connection to at least a mobile telecommunication network and comprising at least an applet manager and at least a first applet. The telecommunications chip card further comprising means for receiving a registration of a first handset entity from a chip card reader to a first applet manager; means for forwarding the registration from the first applet manager to the at least first applet; means for sending at least a first control data from the at least first applet to the first applet manager and means for forwarding the at least first control data from the first applet manager to the chip card reader for comparison of the at least first control data with a first data event related to a digital data broadcast by the first handset entity. The telecommunications chip card further comprises: means for receiving at least a portion of the first data event from the first handset entity through the chip card reader to at least the first applet manager, if the portion of the first data event corresponds to at least the first control data; means for forwarding the portion of the first data event from the first applet manager to at least the first applet; means for processing the portion of the first data event for generating a first return signal by at least the first applet and means for sending a first return signal from at least the first applet to the first applet manager. One of the advantages is that allows implementing new services and interaction with the first handset and with the first handset entity using only the chip card.

The term "handset" as used herein encompasses any wireless portable telecommunications device such as mobile phone, smart phone, portable media player (PMP), personal digital assistant (PDA) or laptop. The term "applet" as used herein encompasses any card applet such as java applet, windows applet or MULTOS application. The term "chip card" as used herein encompasses as well smart card, integrated circuit card (ICC) or portable data carrier with interoperable processor.

The first handset entity in the telecommunications chip card is a rendering means for rendering the first data event, and the telecommunications chip card further comprises: means for sending the first return signal from the first applet manager to the chip card reader for processing by the first handset entity. One of the advantages of the invention is that it allows an interaction with the rendering means, as for example a media player, using only the chip card.

In accordance with an embodiment, the telecommunications chip card further comprises a second applet manager; means for receiving a first response of the first handset entity from the chip card reader by the first applet manager and means for transferring the first response from the first applet manager to the second applet manager for handset or chip card customization. One of the advantages of the embodiments is that it enables new services to the users of the handset by using the bandwidth of the digital data broadcast network, by transferring the response from a first applet manager coupled to a handset entity, as for example a rendering means, to a second applet manager.

In accordance with an embodiment of the invention, the telecommunications chip card further comprises a second applet manager; means for receiving a first response of the first handset entity from the chip card reader by the first applet manager and means for transferring the first response to the second applet manager for communicating with a mobile communication network. One of the advantages of the embodiments is that it allows the user of the handset entity to use a feedback channel in order to respond to a request sent by the digital data broadcast network or by the user of the handset.

In accordance with an embodiment of the invention, the telecommunications chip card further comprises a second applet manager; means for receiving a first response of the first handset entity from the chip card reader by the first applet manager and means for transferring the first response to the second applet manager, the second applet manager being operable for communicating with a computer via a physical interface or a short-range wireless technology. One of the advantages of the embodiments is that allows a connection to a computer that may be connected to the internet, as a feedback channel to respond to a request sent by the digital broadcast network or by the user from the handset.

In accordance with an embodiment of the invention, the first return signal from the first applet to the first applet manager corresponds to a description of a rich interactive application for being displayed on the first handset entity. One of the advantages of the embodiments is that allows the interactivity between the handset entity, the chip card, the digital broadcast network and the user of the handset.

In accordance with an embodiment of the invention, the first handset entity of the telecommunications chip card is the multiplexer being adapted for receiving a digital data broadcast. One of the advantages of the embodiments is that the digital data broadcast contains a first type of data being adapted for the rendering means and a second type of data being adapted for the applet and the applet manager in the chip card.

In accordance with an embodiment of the invention, the telecommunications chip card further comprises a second applet manager; means for receiving a first response of the first handset entity from the chip card reader by the first applet manager and means for using the first response of the first handset entity for handset customization. One of the advantages of the embodiments is that enables new services to the users of the handset by using the bandwidth of the digital data broadcast network

In accordance with an embodiment of the invention, the first applet manager and the first applet can be implemented as a single applet. One of the advantages of the embodiments is that simplifies the communication between the appiets and the handset entities when, for example, only one applet is available.

In another aspect, the invention relates to a handset comprising: a chip card reader for receiving a telecommunications chip card, the multiplexer being adapted for processing the digital data broadcast from a unidirectional broadcast network and connected to the chip card reader; a rendering means for rendering a second data event and coupled to the multiplexer and connected to the chip card reader; means for separating the received digital data broadcast by the multiplexer into a second data event for rendering by the rendering means and a portion of first data event for handset customization by a first applet manager in the chip card; means for sending the second data event to the rendering means and means for sending the portion of first data event to chip card reader for processing by a first applet manager in the chip card. One of the advantages of the embodiments is that allows an interaction from the telecommunications chip card with the different elements of the network as the digital data broadcast network (or mobile TV network), with the rendering means (as a media player) and with the user that handles the handset

In another aspect, the invention relates to a use of a telecommunications chip card for buffering of a first data event from a rendering means from a handset entity. A further advantage of the invention is that it allows time shifting from the telecommunications chip card. Time shifting allows depending on the capacity of the telecommunications chip card to store the recorded programs while the user is not available or to manage the VCR service that is storing the recording programs on the server.

In accordance with an embodiment of the invention, the telecommunications chip card comprises a storage medium element and the first data event corresponds to a digital data broadcast for further processing by at least a first applet before being forwarded to a first applet manager. One of the advantages of this embodiment is that it may use the telecommunications chip card as a storage medium when the internal handset memory is not available or it is full. In telecommunications chip card with little amount of storage, the chip card sends a VCR request to a time shifting server.

In another aspect, the invention relates to a data processing method of controlling a handset, the handset having an integrated chip card reader for receiving a telecommunications chip card, the telecommunications chip card comprising at least a first applet manager and at least a first applet, the handset having at least a first handset entity being adapted for receiving a digital data broadcast. The method comprising: registering the at least first handset entity to the first applet manager; forwarding the registration from the first applet manager to the at least first applet; sending at least first control data from the at least first applet to the first applet manager; forwarding the at least first control data from the first applet manager to the first handset entity; comparing the at least first control data with at least a first data event related to a digital data broadcast by the handset entity; sending at least a portion of the first data event from the first handset entity to at least the first applet manager, if the portion of the first data event corresponds to at least the first control data. The method further comprises: forwarding the portion of the first data event from the first applet manager to at least the first applet; processing the portion of the first data event for generating a first return signal by at least the first applet; sending the first return signal from at least the first applet to the first applet manager.

The handset further comprises a second handset entity and the first handset entity is a rendering means. The method further comprises: receiving the first data event from a second handset entity, the second handset entity being adapted for processing the digital data broadcast; forwarding the first return signal from the first applet manager to the first handset entity.

In accordance with an embodiment of the invention, the chip card further comprises a second applet manager and the method further comprises: receiving a first response from the first handset entity by the first applet manager; transferring the first response from the first applet manager to the second applet manager for handset customization.

In accordance with an embodiment of the invention, the chip card further comprises a second applet manager and the method further comprises: receiving a first response from the first handset entity by the first applet manager; transferring the first response to the second applet manager for communicating with a mobile communications network.

In accordance with an embodiment of the invention, the second handset entity is a multiplexer and the second applet manager is coupled to the second handset entity.

In accordance with an embodiment of the invention, the first return signal from the first applet to the first applet manager corresponds to a a description of a rich interactive application for being displayed on the first handset entity.

In accordance with an embodiment of the invention, the first handset entity is a multiplexer being adapted for processing the digital data broadcast from a unidirectional broadcast network.

In accordance with an embodiment of the invention, the handset further comprises a second handset entity and the method further comprises: separating the digital data broadcast by the first handset entity into a portion of first data event for handset customization by the first applet manager and a second data event for rendering by the second handset entity.

In accordance with an embodiment of the invention, the telecommunications chip card further comprises a second applet manager coupled to the second handset entity and the method further comprises forwarding the first return signal from the first applet manager to the second applet manager; adapting the first return signal to a rendering format of the second handset entity.

In another aspect, the invention relates to a computer program product in a telecommunications chip card for carrying personalization data for connection to at least a mobile telecommunications network and comprising at least an applet manager and at least a first applet, the telecommunications chip card further comprising: receiving a registration of a first handset entity from a chip card reader to a first applet manager; forwarding the registration from the first applet manager to the at least first applet; sending at least a first control data from the at least first applet to the first applet manager and forwarding the at least first control data from the first applet manager to the chip card reader for comparison of the at least first data with a first data event related to a digital data broadcast by the first handset entity. The computer program product further comprises: receiving at least a portion of the first data event from the first handset entity through the chip card reader to at least the first applet manager, if the portion of the first data event corresponds to at least the first control data; forwarding the portion of the first data event from the first applet manager to at least the first applet; processing the portion of the first data event for generating a first return signal by at least the first applet; and sending a first return signal from at least the first applet to the first applet manager; forwarding the first return signal (111) from the first applet manager (104) to the first handset entity (101).

### Brief description of the drawings

In the following preferred embodiments of the invention are described in greater detail by way of example only making reference to the drawings in which:
- Fig. 1: is a block diagram of a telecommunications method in accordance with an embodiment of the invention,
- Fig. 2: is a sequence of operation of a telecommunications method in accordance with a first preferred embodiment of the invention,
- Fig. 3: is a block diagram of a telecommunications method in accordance with a second embodiment of the invention,
- Fig. 4: is a block diagram of a further preferred embodiment of a telecommunications method of the invention,
- Fig. 5: is a block diagram of a further preferred embodiment of a telecommunications method of the invention,
- Fig. 6: is a block diagram of a further preferred embodiment of a telecommunications method of the invention,
- Fig. 7: is a block diagram of a further preferred embodiment of a telecommunications method of the invention,

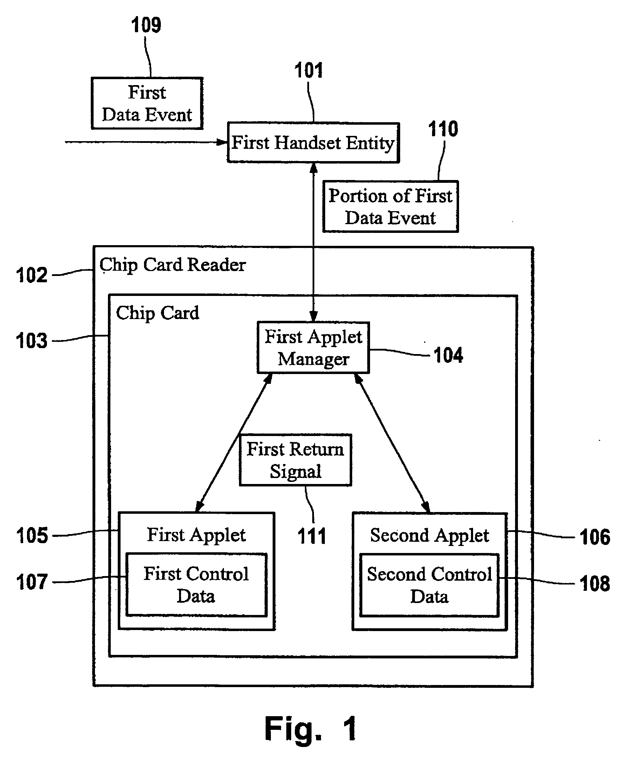

Fig. 1 shows a block diagram of a handset that includes a first handset entity 101, a chip card reader 102 for reading a chip card 103. The chip card further comprises a first applet manager 104, a first applet 105 and may include a second applet 106. The first applet 105 further comprises the first control data 107 and the second applet 106 may comprise a second control data 108.

On the handset startup, the first handset entity sends a registration to the first applet manager 104. The first applet manager 104 forwards this registration to the at least first applet 105. The first applet 105 sends to the first applet manager 104 the at least first control data 107. The first applet manager then forwards this first control data to the first handset entity 101. The first handset entity 101 receives a first data event 109 and compares the first data event 109 with the at least first control data 107. Based on this comparison, the first handset entity 101 sends at least a portion of the first data event 110 if the portion of the first data event 110 corresponds to at least one of the at least first control data 107. The first applet manager 104 forwards the portion of the first data event 110 to at least the first applet 105. At least the first applet 105 processes the portion of the first data event 110 for generating a first return signal to the first applet manager 104. The first return signal is then sent from at least the first applet to the first applet manager.

The second applet 106 may also be present in the chip card or may be added at a later point through an over the air update. This second applet 106 generates a second control data 108 and performs following the steps of the invention. The presence of the first applet manager 104 even by having a first applet 105 assures the possibility of updating the chip card by adding a second applet 106 or a plurality of applets. Alternatively, at least the first applet manager and at least the first applet may be implemented by a single applet. The applet manager and the applet may be implemented as independent card applets or java card applets, or communicating together on a single card applet or java card applet. The chip card may be also implemented as a secure element within a handset and perform all the operations according to the invention.

The registration of the first handset entity 101 may include a predefined URL on the first applet manager 104, using for example a command as get/register. A predefined URL is understood as a Uniform Resource Identifier (URI) or any syntax for global identifiers of network retrievable documents. The first applet manager then may pass the request or the registration to other applets as the first and second applet 105, 106 that will answer with a series of events or control data to register on the first applet manager or the first handset entity. This information may include adding the URL of the applets for the further direct access. When the handset is receiving digital data broadcasts from a mobile TV broadcasting network, the first handset entity may receive a portion of these digital data broadcasts and this portion may be called the first data event 109.

One of the advantages of the embodiments is that allows implementing new services and interaction with the first handset and with the first handset entity using only the chip card. All these types of services and small applications are stored in the applets that are managed by the first applet manager. Another advantage of the embodiments is that allows an interaction from the telecommunications chip card with the different elements of the network as the digital data broadcast network (or mobile TV network), with the rendering means (as a media player) and with the user that handles the handset. The digital data broadcast may be compliant with one of the the mobile TV broadcasting networks as DVB, ISDB, and DMB. The mobile telecommunications network may be compliant with the standards as GSM, UMTS, WiMax. The interaction of the handset and handset entities may be understood as a generic service framework running in the telecommunications chip card.

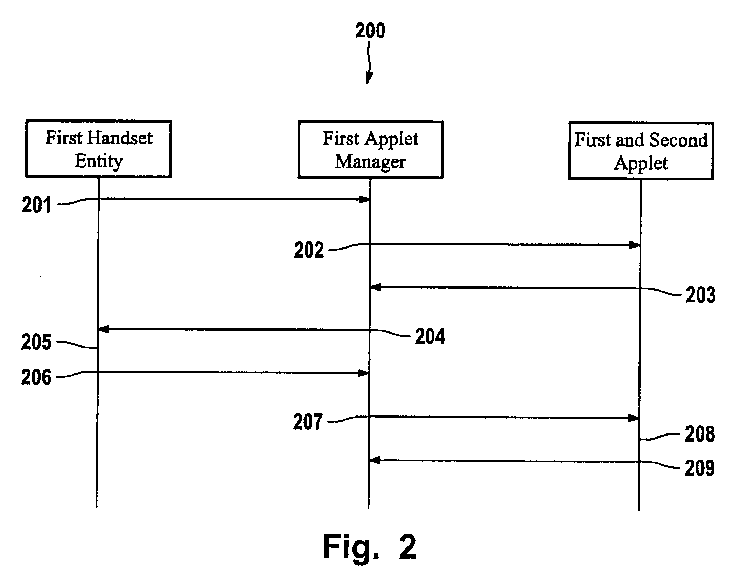

Fig. 2 shows a sequence of operation diagram. The sequence of operation diagram depicts the steps performed and the messages exchanged between the first handset entity, the first applet manager, and the first and second applet. First the first handset entity sends a registration to the first applet manager 201. Then, this registration is forwarded from the first applet manager to the first and second applet 202. The first and second applets generate a first and second control data that is sent to the first applet manager 203. Then, the first and second control data is forwarded from the first applet manager to the first handset entity 204. This first and second control data is used for comparison with the first data event 205. If the portion of the first data event corresponds to at least one of the first and second control data then the portion of the first data event is sent to the first applet manager 206. This portion is then forwarded to the first and second applets 207. The applets process the portion of the first data event 208 and generate a first return signal to the first applet manager 209.

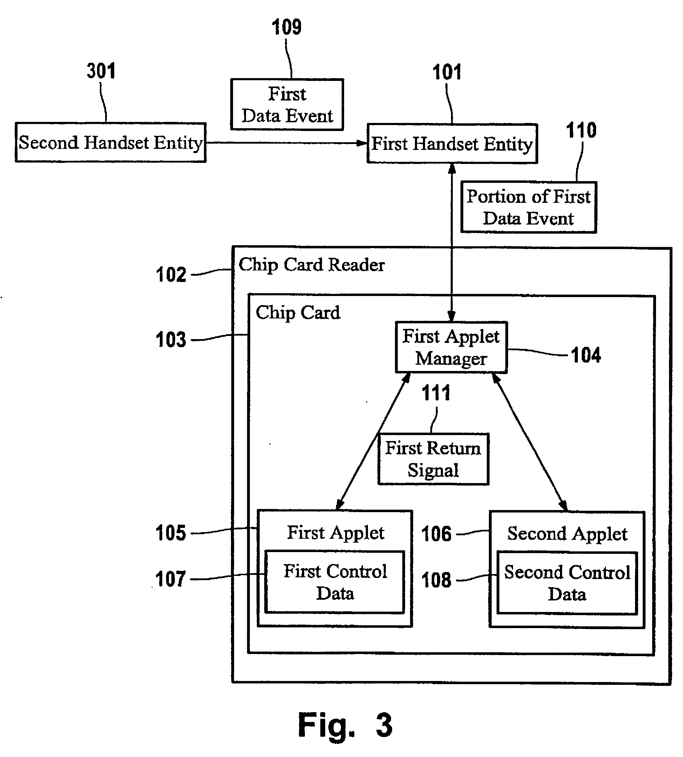

Fig. 3 shows a block diagram of a handset including a first handset entity 101 and a chip card reader 102. Fig. 3 further shows a chip card 103. The elements in the embodiment shown in fig. 3 that corresponds to elements of the embodiment of fig. 1 have been designated by the same reference signals. The first handset entity 101 is a rendering means used for rendering the first data event. On the handset startup, the first handset entity calls a predefined URL on the first applet manager and requests a registration. The first applet manager 104 passes the request to all the applets 105, 106 that responds with the first and second control data 107, 108. This control data may include the URL for a direct access to the applets. The first data event is related to a digital data broadcast that may include video, video content or electronic service guide. This first data event has been previously processed by a second handset entity 301. When the first handset entity 101 is received in the first data event 109 it compares the first and second control data 107, 108 with the received first data event 109. If the first data event corresponds to at least one of the first and second control data 107, 108, then a portion of the first data event is sent 110. The first and second control data 107, 108 may be seen as information related to the first data event as changes in the first handset entity as turned off or on or changing the stream of the digital data broadcast or the channel of the network. The portions of the first data event 110 may include the time and the type of stream or some notification about the channels that are rendered using the first handset entity.

When the first data event matches at least one of the first and second control data and the portion of the first data event 110 is sent to the first applet manager, the first applet manager 104 forwards this information to the applet whose corresponding the matching of the control data. For example, if the first applet sends a first control data 107 to the first handset entity with the information of e.g. a user zapping a channel, then the portion of the first data event 110 will be sent to the specific first applet 105 for further processing. The first applet 105 then generates a first return signal 111 to the first applet manager 104. The first applet manager 104 then forwards the first return signal 111 to the first handset entity 101.

This first return signal 111 may include for example notification of adult/violent programs, or notifications of a price change, as well as advertisement to be rendered by the first handset entity. One of the advantages of the embodiments is the type of services that may run on one of the applets. One of the services is related to the parental control, where a dedicated applet implements a set of rights introduced by a user in collaboration with the rendering means or the media player. The applet transmits a description of a rich interactive application. This description may be for example in the form of a HTML page that is displayed as pop-up windows with the restrictions to be applied to the user of the rendering means.

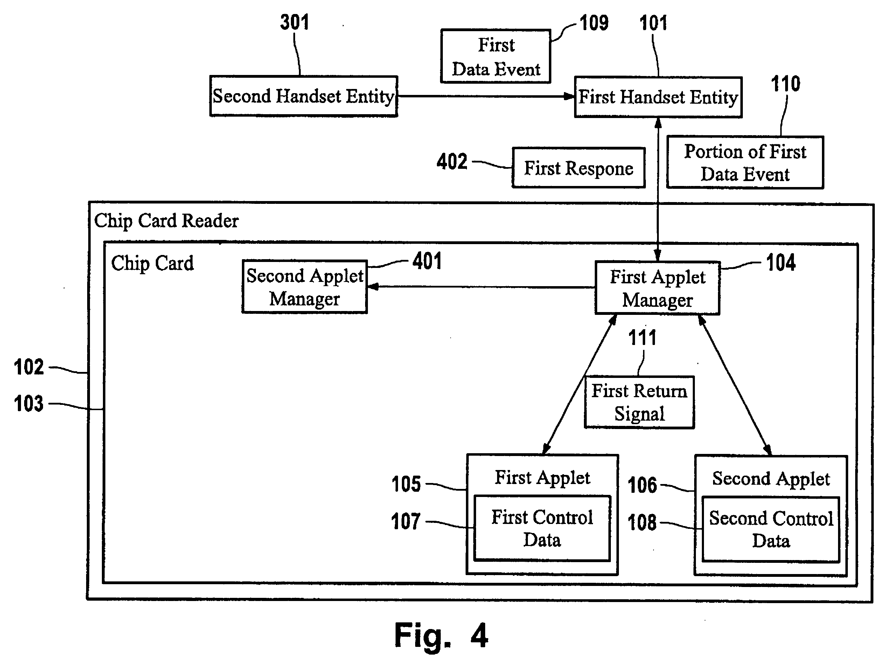

Fig. 4 shows a block diagram of a handset including a first and second handset entity and a chip card reader, and a chip card comprising a first and second applet manager. The first handset entity is a rendering means and the second handset entity is a demultiplexer. The elements in the embodiment shown in fig. 4 that correspond to elements of the embodiment of fig. 1 have been designated by the same reference signals. After the comparison between the first data event 109 and the first and second control data 107, 108 done by the first handset entity 101 has been completed, the series of signals between the first handset entity and the first applet manager 104 are changed as the portion of the first data event 110 and a first return signal 111. Depending on the content of the first return signal 111 that arrives at the first handset entity 101, a first response 402 may be generated. This first response 402 is forwarded to the first applet manager 104 that may require consent the first response 402 to the second applet manager 401. The second applet manager 401 then uses this first response 402 for handset or chip card customization and administration purposes. This handset or chip card customization and administration might include, for example, modification of the handset parameters as the user interface, the applications, user data, and the possibility of making available new services to the handset. The embodiment is particularly advantageous as it may enable new services to the users of the handset by using the great bandwidth of the digital data broadcast network if the for example cellular mobile network as UMTS or GSM is not available. The first return signal 111 that was sent to the first handset entity 101 may include information regarding a request to the user of the handset about the parameters to be used during the handset customization.

In a further advantage of the embodiments, the chip card is able to store and manage data content related to the electronic service guide, using the digital data broadcast or the cellular mobile telecommunications network to upload information or web pages describing programs displayed on the electronic service guide and rendered by the rendering means. Subsequently, the user of the rendering means has access to this information using the applets that interact with the rendering means.

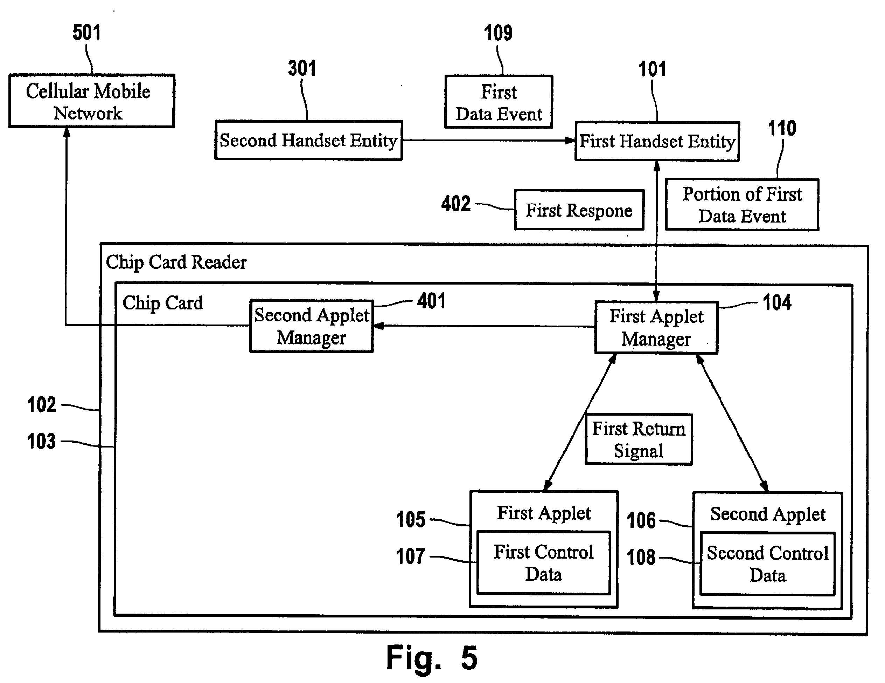

Fig. 5 shows a block diagram of a chip card 103, a handset that comprises a first and second entity 101, 301 and a chip card reader 102 for reading the chip card 103. The chip card further comprises a first and second applet manager 104, 401. The second applet manager 401 is being adapted for communicating with a cellular mobile network 501. When the first handset entity 101 that corresponds to rendering means starts receiving a first data event 109 that is related to the digital data broadcast, it compares the received first data event 109 with the first and second control data 107, 108. Based on the comparison made by the first handset entity 101 a portion of the first data event 110 may be sent to one of the first and second applets 105, 106 and a first return signal may be generated by one of the applets and sent to the first handset entity 101. If the first return signal 111 requires a response from the first handset entity, then the first response 402 will be generated and sent to the first applet manager. Then, the first response 402 is forwarded to the second applet manager 401 that allows connecting to cellular mobile network 501 and sending this first response 402 to the network 501.

One of the advantages of the embodiments is that allows the user of the handset entity to use a feedback channel in order to respond to a request sent by the digital data broadcast network. As the digital data broadcast network is in general a unidirectional network, and then the second applet manager 401 manages all the data so that it can be fed back to the system. Another advantage of the embodiments is the possibility to manage a voting or advertisement request from the chip card. This voting request might be generated by a mobile network operator using one of the digital data broadcast networks to send or trigger a vote during watching one of the channels in the rendering means. This information will be first processed by the applet manager connected to the multiplexer that will further send a request to the applets. Subsequently, the data will be transferred to a second applet manager there is coupled to the rendering means, sending all required information to the rendering means for setting a rich interactive application, for example in the form of an HTML page on the main screen of the media player and asking the user to generate a vote. The response of the rendering means will be forwarded to the applet manager that is adapted for processing and sending the data to a mobile cellular telecommunications network. Alternatively, the applet may be adapted for processing and sending the data to the mobile telecommunications network.

A further advantage of the embodiments is that allows collecting statistic information regarding the use of the rendering means and the channels displayed by the rendering means and watched by the user. The applets in the chip card will track the user habits by monitoring parameters as the channel, the time, duration and frequency of use and downloading this information on a regular basis using the feedback channel provided by a cellular telecommunications network. The mobile network operator then will be able to analyze and use this data to define and improve the usage of its services.

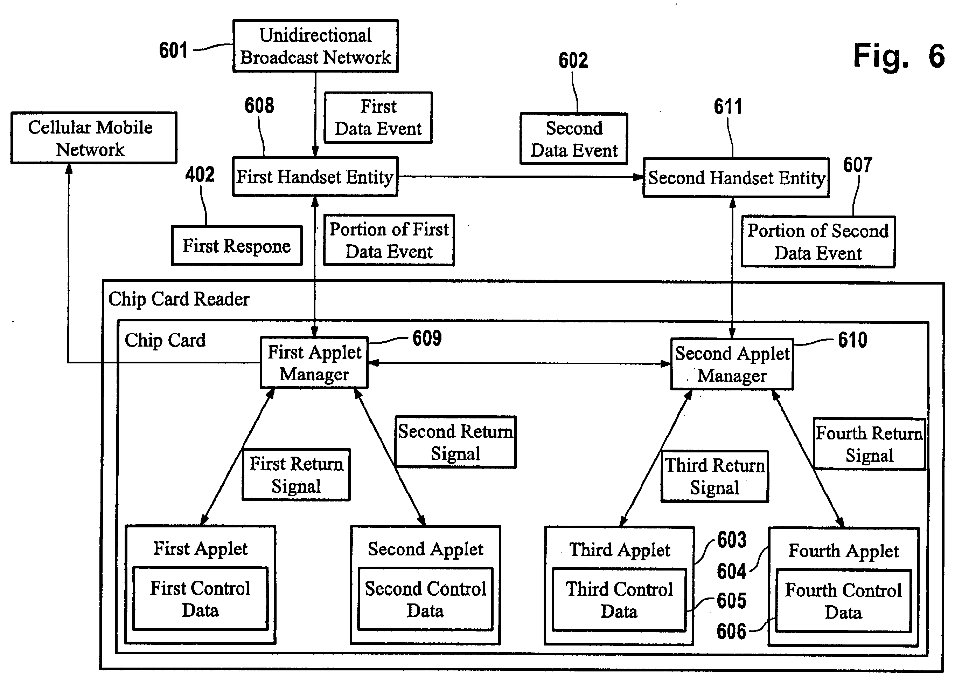

Fig. 6 shows a block diagram of a handset comprising a first and a second handset entity and a chip card, wherein the chip card reader is adapted for reading a chip card. The elements in the embodiment shown in fig. 6 that correspond to elements of the embodiment of fig. 1 have been designated by the same reference signals. In this first embodiment the first handset entity is the multiplexer and the second handset entity is a rendering means. On handset startup, the multiplexer calls a predefined URL on the first applet manager. The first applet manager 104 forwards this request to all applets first and second applet 105 and 106, that responds with a first and second control data 107, 108 to be registered in the first applet manager 104 and alternatively in the first handset entity 101.

When the handset receives a first data event 109 from a unidirectional broadcast network 601, the first handset entity 101 starts comparing this first data event 109 with at least the first and second control data 107, 108. If a portion of the first data event corresponds to at least one of the first and second control data 107, 108, then the portion of the first data event 110 will be sent to the first applet manager 104. The first applet manager 104 then forwards the portion of the first data event 110 to the applet that has sent the matched control data. At least one of the first and second applets 105, 106 processes the received portion of the first data event 110 and sends a first return signal 111 to the first applet manager 104. The first return signal 111 can be used by the first applet manager 104 for handset customization or handset administration purposes. Alternatively the first applet manager 104 if required by the service that is provided will forward the first return signal 111 to a second applet manager 401 that communicates with the second handset entity 301.

The first return signal 111 that is received by the second handset entity may be for example a request for a voting service to the user of the handset and the second handset entity, or an advertisement to be displayed by the second handset entity. This content of the first return signal 111 could be also a user interface parameter or applications being used by the second handset entity that will be updated or upgraded by the first return signal. The second handset entity 601 is at the same time rendering the second data event 602 that is provided by the first handset entity 101. The second data event 602 corresponds to the rendering portion of the first data event 109 that has been separated by the first handset entity 101.

Another advantage of the embodiments is that the mobile network operators are able to use the high speed channel of the mobile TV broadcasting network (or digital data broadcast network) to transport non-mobile TV data to be used by the telecommunications chip card and by the handset to perform different actions such as device management, dynamic management of mobile services and handset customizations.

The invention executes two new types of card application or applets to enable the interactivity between the user of the handset and the mobile network operator. A first type of card applications interact with generic data transmitted over the digital data broadcast or the so called mobile TV broadcasting network. The second type of card interacts directly with the mobile TV, or so called rendering means. These two applet managers can alternatively communicate to share the type of application and re-transmit it to the rendering means or as a feedback channel using the mobile cellular telecommunications network. The first type of card application receives data through the multiplexer coming from the digital data broadcast network and the second type of card application interact with the rendering means or the media player to display services, get user entries and if necessary transfer request to the mobile network operator or mobile telecommunications network. This type of service framework relies on the smartcard web server applications (SCWS) or any kind of SIM Toolkit mechanism as defined in the telecommunications standards such as ETSI and 3GPP.

In further embodiments the first and second control data 107, 108 may be updated using the unidirectional broadcast network 601 that sends the data and that is received by the first handset entity that further forwards the information up to the applets that modifies the content of the first and second control data 107, 108. The second applet manager 401 may be connected to a third and a fourth applet 603, 604 that contained a third and fourth control data 605, 606 respectively. This third and fourth control data 605, 606 may be also updated or modified through the unidirectional broadcast network 601. The third and fourth applets 603, 604 are used in general to send and receive control data to and from the second handset entity 301, whereas the first and second applet communicate in general with the first handset entity 101 using the first applet manager 104. All responses or feedbacks may be sent using the cellular mobile network as a feedback channel and using one of the first and second applet managers.

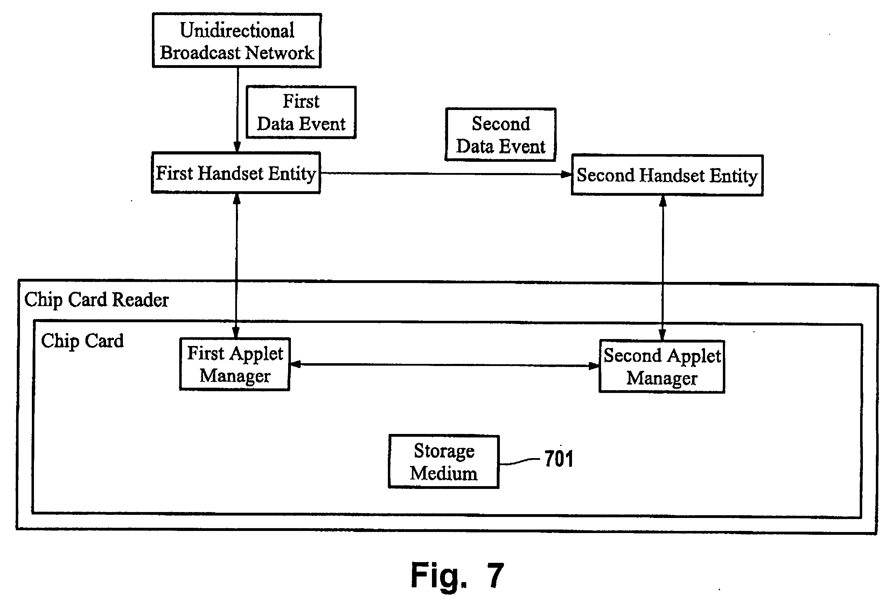

Fig. 7 shows the use of a telecommunications chip card for buffering of a first data event from a rendering means. Alternatively, the buffering of a first data may be sent from a demultiplexer. The telecommunications chip card may buffer the data event in a storage medium.

A further advantage of the embodiments is that allows time shifting from the telecommunications chip card. Time shifting allows depending on the capacity of the telecommunications chip card to store the recorded programs while the user is not available or to manage the VCR service that is storing the recording programs on the server. Telecommunications chip card with a large storage medium will be able to store the stream content that is generally sent to the media player on the chip card instead of using the internal memory of the handset. When the user makes a request, the stored stream in telecommunications chip card will be forwarded to the rendering means or to the media player to play the recorded sequence. This service has the advantage that it may use the telecommunications chip card as a storage medium when the internal handset memory is not available or it is full. In telecommunications chip card with little amount of storage, the chip card sends a VCR request to a time shifting server. This server will record the digital data broadcast while the user is requesting to do so. When the user makes a request to play the recorded stream, the time shifting server sends the stream using a unicast medium. The chip card and the applets will then manage the communication between the time shifting server and the rendering means.

**List of Reference Numerals**

| | |
|---|---|
| 101 | First Handset Entity |
| 102 | Chip Card Reader |
| 103 | Chip Card |
| 104 | First Applet Manager |
| 105 | First Applet |
| 106 | Second Applet |
| 107 | First Control Data |
| 108 | Second Control Data |
| 109 | First Data Event |
| 110 | Portion of First Data Event |
| 111 | First Return Signal |
| 200 | Sequence of Operation Diagram |
| 301 | Second Handset Entity |
| 401 | Second Applet Manager |
| 402 | First Response |
| 501 | Cellular Mobile Network |
| 601 | Unidirectional Broadcast Network |
| 602 | Second Data Event |
| 603 | Third Applet |
| 604 | Forth Applet |
| 605 | Third Control Data |
| 606 | Forth Control Data |
| 607 | Portion of Second Data Event |
| 608 | First handset entity |
| 609 | First applet manager |
| 610 | Second applet manager |
| 611 | Second handset entity |

## Claims

1. A telecommunications chip card (103) for carrying personalization data for connection to at least a mobile telecommunications network and comprising at least an applet manager (104) and at least a first applet (105), wherein the chip card (103) further comprises a second applet manager (401), the telecommunications chip card (103) further comprising:
- means for receiving a registration of a first handset entity (101) from a chip card reader (102) to a first applet manager (104);
- means for forwarding the registration from the first applet manager (104) to the at least first applet (105);
- means for sending at least a first control data (107) from the at least first applet (105) to the first applet manager (104);
- means for forwarding the at least first control data (107) from the first applet manager (104) to the chip card reader (102) for comparison of the at least first control data (107) with a first data event (109) related to a digital data broadcast by the first handset entity (101), wherein the first handset entity (101) is a rendering means for rendering the first data event;
- means for receiving at least a portion of the first data event (110) from the first handset entity (101) through the chip card reader (102) to at least the first applet manager (104), if the portion of the first data event (110) corresponds to at least the first control data (107);
- means for forwarding the portion of the first data event (110) from the first applet manager (104) to at least the first applet (105);
- means for processing the portion of the first data event (110) for generating a first return signal (111) by at least the first applet (105);
- means for sending a first return signal (111) from at least the first applet (105) to the first applet manager (104);
- means for sending the first return signal (111) from the first applet manager to the chip card reader for processing by the first handset entity (101);
- means for receiving a first response (402) of the first handset entity (101) from the chip card reader (102) by the first applet manager (104);
- means for transferring the first response (402) to the second applet manager (401) for communicating with a mobile communications network (501).

2. A telecommunications chip card as in claim 1, wherein the chip card (103) further comprises a second applet manager (401) and:
- means for receiving a first response (402) of the first handset entity (101) from the chip card reader (102) by the first applet manager (104); and
- means for transferring the first response (402) to the second applet manager (401), the second applet manager (401) being operable for communicating with a computer via a physical interface or a short-range wireless technology.

3. A telecommunications chip card as in claim 1, wherein the first handset entity (608) is a demultiplexer being adapted for receiving a digital data broadcast

4. A telecommunications chip card as in claim 1 and claim 3, wherein the chip card further comprises a second applet manager (610) and:
- means for receiving a first response (402) of the first handset entity (608) from the chip card reader (102) by the first applet manager (609);
- means for using the first response (402) of the first handset entity (608) for handset customization.

5. A handset comprising:
- a chip card reader (102) for receiving a telecommunications chip card (103) according to any one of the claims 1 to 4;
- a demultiplexer (301) being adapted for processing a first data event from a unidirectional broadcast network (601) and connected to the chip card reader (102);
- a rendering means (101) for rendering a second data event (109) and coupled to a demultiplexer (301) and connected to the chip card reader (102);
- means for separating the first data event by the demultiplexer (301) into a second data event (109) for rendering by the rendering means and a portion of first data event for handset customization by a first applet manager (104) in the chip card (103);
- means for sending the second data event (109) to the rendering means (101);
- means for sending the portion of first data event to a chip card reader (102) for processing by a first applet manager (104) in the chip card (103).

6. A data processing method of controlting a handset, the handset having an integrated chip card reader (102) for receiving a telecommunications chip card (103), the telecommunications chip card (103) comprising at least a first applet manager (104) and at least a first applet (105), wherein the chip card (103) further comprises a second applet manager (401), the handset having at least a first handset entity (101) being adapted for receiving a digital data broadcast, and the handset comprising a second handset entity (301), the second handset entity being adapted for processing the digital data broadcast, and wherein the first handset entity (101) is a rendering means , the method comprising:
- registering the at least first handset entity (101) to the first applet manager (104);
- forwarding the registration from the first applet manager (104) to the at least first applet (105);
- sending an at least first control data (107) from the at least first applet (105) to the first applet manager (104);
- forwarding the at least first control data (107) from the at least first applet manager (104) to the first handset entity (101);
- receiving a first data event (109) from the second handset entity (301);
- comparing the at least first control data (107) at least with the first data event (109) related to a digital data broadcast by the handset entity (101);
- sending at least a portion of the first data event (110) from the first handset entity (101) to at least the first applet manager (104), if the portion of the first data event (110) corresponds to at least the first control data (107);
- forwarding the portion of the first data event (110) from the first applet manager (104) to at least the first applet (105);
- processing the portion of the first data event (110) for generating a first return signal (111) by at least the first applet (105);
- sending the first return signal (111) from at least one of the first applet (105) to the first applet manager (104);
- forwarding the first return signal (111) from the first applet manager (104) to the first handset entity (101);
- receiving a first response (402) from the first handset entity (101) by the first applet manager (104);
- transferring the first response (402) from the first applet manager (104) to the second applet manager (401) for handset customization.

7. A method as in claim 6, wherein the chip card further comprises a second applet manager (401) and the method further comprises:
- receiving a first response (402) from the first handset entity (101) by the first applet manager (104);
- transferring the first response (402) to the second applet manager (401) for communicating with a mobile communications network (501).

8. A method as in any of claims 6 to 7, wherein the second handset entity (301) is a demultiplexer and wherein the second applet manager (401) is coupled to the second handset entity (301).

9. A method as in any of claims 6 to 7, wherein the first return signal (111) from the first applet (105) to the first applet manager (104) corresponds to a description of a rich interactive application for being displayed on the first handset entity.

10. A method as in claim 6, wherein the first handset entity (608) is a demultiplexer being adapted for processing the digital data broadcast from a unidirectional broadcast network (601).

11. A method as in claim 10, wherein the method further comprises:
- separating the digital data broadcast by the first handset entity (608) into a portion of first data event (110) for handset customization by the first applet manager (609) and a second data event (602) for rendering by the second handset entity (611).

12. A method as in claim 11, wherein the chip card (103) further comprises a second applet manager (610) coupled to the second handset entity (611) and the method further comprises:
- forwarding the first return signal (111) from the first applet manager (609) to the second applet manager (610);
- adapting the first return signal (111) to a rendering format of the second handset entity (611).

13. A computer program product in a telecommunications chip card (103) for carrying personalization data for connection to at least a mobile telecommunications network and comprising at least an applet manager (104) and at least a first applet (105), the telecommunications chip card further comprising:
- receiving a registration of a first handset entity (101) from a chip card reader (102) to a first applet manager (104);
- forwarding the registration from the first applet manager (104) to the at least first applet (105);
- sending at least a first control data (107) from the at least first applet (105) to the first applet manager (104);
- forwarding the at least first control data (107) from the first applet manager (104) to the chip card reader (102) for comparison of the at least first control data (107) with a first data event (109) related to a digital data broadcast by the first handset entity (101);
- receiving at least a portion of the first data event (110) from the first handset entity (101) through the chip card reader (102) to at least the first applet manager (104), if the portion of the first data event (110) corresponds to at least the first control data (107);
- forwarding the portion of the first data event (110) from the first applet manager (104) to at least the first applet (105);
- processing the portion of the first data event (110) for generating a first return signal (111) by at least the first applet (105);
- sending a first return signal (111) from at least the first applet (105) to the first applet manager (104);
- forwarding the first return signal (111) from the first applet manager (104) to the first handset entity (101);
- receiving a first response (402) from the first handset entity (101) by the first applet manager (104);
- transferring the first response (402) from the first applet manager (104) to the second applet manager (401) for handset customization.

## Patentansprüche

1. Telekommunikations-Chipkarte (103) zum Tragen von Personalisierungsdaten zur Verbindung mit wenigstens einem Mobiltelekommunikationsnetz und die wenigstens einen Applet-Manager (104) und wenigstens ein erstes Applet (105), wobei die Chipkarte (103) ferner einen zweiten Applet-Manager (401) aufweist, wobei die Telekommunikations-Chipkarte (103) ferner Folgendes aufweist:
- eine Einrichtung zum Empfangen einer Registrierung einer ersten Handapparat-Entität (101) von einem Chipkartenleser (102) bei einem ersten Applet-Manager (104);
- eine Einrichtung zum Weiterleiten der Registrierung vom ersten Applet-Manager (104) zu dem wenigstens ersten Applet (105);
- eine Einrichtung zum Senden von wenigstens ersten Steuerdaten (107) von dem wenigstens ersten Applet (105) zu dem ersten AppletManager (104);
- eine Einrichtung zum Weiterleiten der wenigstens ersten Steuerdaten (107) von dem ersten Applet-Manager (104) zu dem Chipkartenleser (102) zum Vergleich der wenigstens ersten Steuerdaten (107) mit einem ersten Datenereignis (109) in Bezug auf eine digitale Datenrundsendung durch die erste Handapparat-Entität (101), wobei die erste Handapparat-Entität (101) eine Wiedergabeeinrichtung zum Wiedergeben des ersten Datenereignisses ist;
- eine Einrichtung zum Empfangen von wenigstens einem Teil des ersten Datenereignisses (110) von der ersten Handapparat-Entität (101) durch den Chipkartenleser (102) zu wenigstens dem ersten Applet-Manager (104), wenn der Teil des ersten Datenereignisses (110) wenigstens den ersten Steuerdaten (107) entspricht;
- eine Einrichtung zum Weiterleiten des Teils des ersten Datenereignisses (110) von dem ersten Applet-Manager (104) zu wenigstens dem ersten Applet (105);
- eine Einrichtung zum Verarbeiten des Teils des ersten Datenereignisses (110) zum Erzeugen eines ersten Rücksignals (111) durch wenigstens das erste Applet (105);
- eine Einrichtung zum Senden eines ersten Rücksignals (111) von wenigstens dem ersten Applet (105) zu dem ersten Applet-Manager (104);
- eine Einrichtung zum Senden des ersten Rücksignals (111) von dem ersten Applet-Manager zu dem Chipkartenleser zur Verarbeitung durch die erste Handapparat-Entität (101);
- eine Einrichtung zum Empfangen einer ersten Antwort (402) der ersten Handapparat-Entität (101) von dem Chipkartenleser (102) durch den ersten Applet-Manager (104);
- eine Einrichtung zum Übertragen der ersten Antwort (402) an den zweiten Applet-Manager (401) zum Kommunizieren mit einem Mobilkommunikationsnetz (501).

2. Telekommunikations-Chipkarte nach Anspruch 1, wobei die Chipkarte (103) ferner einen zweiten Applet-Manager (401) und Folgendes aufweist:
- eine Einrichtung zum Empfangen einer ersten Antwort (402) der ersten Handapparat-Entität (101) von dem Chipkartenleser (102) durch den ersten Applet-Manager (104); und
- eine Einrichtung zum Übertragen der ersten Antwort (402) zu dem zweiten Applet-Manager (401), wobei der zweite Applet-Manager zum Kommunizieren mit einem Computer über eine physische Schnittstelle oder eine drahtlose Technologie mit kurzer Reichweite betreibbar ist.

3. Telekommunikations-Chipkarte nach Anspruch 1, wobei die erste Handapparat-Entität (608) ein Demultiplexer ist, der dafür ausgelegt ist, eine digitale Datenrundsendung zu empfangen.

4. Telekommunikations-Chipkarte nach Anspruch 1 und Anspruch 3, wobei die Chipkarte (103) ferner einen zweiten Applet-Manager (610) und Folgendes aufweist:
- eine Einrichtung zum Empfangen einer ersten Antwort (402) der ersten Handapparat-Entität (608) von dem Chipkartenleser (102) durch den ersten Applet-Manager (609);
- eine Einrichtung zum Verwenden der ersten Antwort (402) der ersten Handapparat-Entität (608) zur Handapparat-Individualisierung.

5. Handapparat, der Folgendes aufweist:
- einen Chipkartenleser (102) zum Empfangen einer Telekommunikations-Chipkarte (103) nach einem der Ansprüche 1 bis 4;
- einen Demultiplexer (301), der dafür ausgelegt ist, ein erstes Datenereignis von einem unidirektionalen Rundsendungsnetz (601) zu verarbeiten, und mit dem Chipkartenleser (102) verbunden ist;
- eine Wiedergabeeinrichtung (101) zum Wiedergeben eines zweiten Datenereignisses (109) und das mit einem Demultiplexer (301) gekoppelt und mit dem Chipkartenleser (102) verbunden ist;'
- eine Einrichtung zum Trennen des ersten Datenereignisses durch den Demultiplexer (301) in ein zweites Datenereignis (109) zur Wiedergabe durch die Wiedergabeeinrichtung und einen Teil des ersten Datenereignisses zur Handapparat-Individualisierung durch einen ersten Applet-Manager (104) in der Chipkarte (103);
- eine Einrichtung zum Senden des zweiten Datenereignisses (109) zu der Wiedergabeeinrichtung (101);
- eine Einrichtung zum Senden des Teils des ersten Datenereignisses zu einem Chipkartenleser (102) zur Verarbeitung durch einen ersten Applet-Manager (104) in der Chipkarte (103);

6. Datenverarbeitungsverfahren zum Steuern eines Handapparats, wobei der Handapparat einen integrierten Chipkartenleser (102) zum Empfangen einer Telekommunikations-Chipkarte (103) hat, wobei die Telekommunikations-Chipkarte (103) wenigstens einen ersten Applet-Manager (104) und wenigstens ein erstes Applet (105) aufweist, wobei die Chipkarte (103) ferner einen zweiten Applet-Manager (401) aufweist, wobei der Handapparat wenigstens eine erste Handapparat-Entität (101) hat, die dafür ausgelegt ist, eine digitale Datenrundsendung zu empfangen, und der Handapparat eine zweite Handapparat-Entität (301) aufweist, wobei die zweite Handapparat-Entität dafür ausgelegt ist, die digitale Datenrundsendung zu verarbeiten, und wobei die erste Handapparat-Entität (101) eine Wiedergabeeinrichtung ist, wobei das Verfahren Folgendes aufweist:
- Registrieren der wenigstens ersten Handapparat-Entität (101) bei dem ersten Applet-Manager (104);
- Weiterleiten der Registrierung von dem ersten Applet-Manager (104) zu dem wenigstens ersten Applet (105);
- Senden von wenigstens ersten Steuerdaten (107) von dem wenigstens ersten Applet (105) zu dem ersten Applet-Manager (104);
- Weiterleiten der wenigstens ersten Steuerdaten (107) von dem wenigstens ersten Applet-Manager (104) zu der ersten Handapparat-Entität (101);
- Empfangen eines ersten Datenereignisses (109) von der zweiten Handapparat-Entität (301);
- Vergleichen der wenigstens ersten Steuerdaten (107) wenigstens mit dem ersten Datenereignis (109) in Bezug auf eine digitale Datenrundsendung durch die Handapparat-Entität (101);
- Senden wenigstens eines Teils des ersten Datenereignisses (110) von der ersten Handapparat-Entität (101) zu wenigstens dem ersten Applet-Manager (104), wenn der Teil des ersten Datenereignisses (110) wenigstens den ersten Steuerdaten (107) entspricht;
- Weiterleiten des Teils des ersten Datenereignisses (110) von dem ersten Applet-Manager (104) zu wenigstens dem ersten Applet (105);
- Verarbeiten des Teils des ersten Datenereignisses (110) zum Erzeugen eines ersten Rücksignals (111) durch wenigstens das erste Applet (105);
- Senden des ersten Rücksignals (111) von wenigstens einem des ersten Applets (105) zu dem ersten Applet-Manager (104);
- Weiterleiten des ersten Rücksignals (111) von dem ersten Applet-Manager (104) zu der ersten Handapparat-Entität (101);
- Empfangen einer ersten Antwort (402) von der ersten Handapparat-Entität (101) durch den ersten Applet-Manager (104);
- Übertragen der ersten Antwort (402) von dem ersten Applet-Manager (104) zu dem zweiten Applet-Manager (401) zur Handapparat-Individualisierung.

7. Verfahren nach Anspruch 6, wobei die Chipkarte ferner einen zweiten Applet-Manager (401) aufweist und das Verfahren ferner Folgendes aufweist:
- Empfangen einer ersten Antwort (402) von der ersten Handapparat-Entität (101) durch den ersten Applet-Manager (104);
- Übertragen der ersten Antwort (402) an den zweiten Applet-Manager (401) zum Kommunizieren mit einem Mobilkommunikationsnetz (501).

8. Verfahren nach einem der Ansprüche 6 bis 7, wobei die zweite Handapparat-Entität (301) ein Demultiplexer ist und wobei der zweite Applet-Manager (401) mit der zweiten Handapparat-Entität (301) gekoppelt ist.

9. Verfahren nach einem der Ansprüche 6 bis 7, wobei das erste Rücksignal (111) von dem ersten Applet (105) zu dem ersten Applet-Manager (104) einer Beschreibung einer Rich-Interactive-Anwendung zur Anzeige auf der ersten Handapparat-Entität entspricht.

10. Verfahren nach Anspruch 6, wobei die erste Handapparat-Entität (608) ein Demultiplexer ist, der dafür ausgelegt ist, die digitale Datenrundsendung von einem unidirektionalen Rundsendungsnetz (601) zu verarbeiten.

11. Verfahren nach Anspruch 10, wobei das Verfahren ferner Folgendes aufweist:
- Trennen der digitalen Datenausendung durch die erste Handapparat-Entität (608) in einen Teil des ersten Datenereignisses (110) zur Handapparat-Individualisierung durch den ersten Applet-Manager (609) und ein zweites Datenereignis (602) zur Wiedergabe durch die zweite Handapparat-Entität (611).

12. Verfahren nach Anspruch 11, wobei die Chipkarte (103) ferner einen mit der zweiten Handapparat-Entität (611) gekoppelten zweiten Applet-Manager (610) aufweist und das Verfahren ferner Folgendes aufweist: :
- Weiterleiten des ersten Rücksignals (111) von dem ersten Applet-Manager (609) zu dem zweiten Applet-Manager (610);
- Anpassen des ersten Rücksignals (111) an ein Wiedergabeformat der zweiten Handapparat-Entität (611).

13. Computerprogrammprodukt in einer Telekommunikations-Chipkarte (103) zum Tragen von Personalisierungsdaten zur Verbindung mit wenigstens einem Mobiltelekommunikationsnetz und das wenigstens einen Applet-Manager (104) und wenigstens ein erstes Applet (105) aufweist, wobei die Telekommunikations-Chipkarte ferner Folgendes aufweist:
- Empfangen einer Registrierung einer ersten Handapparat-Entität (101) von einem Chipkartenleser (102) bei einem ersten Applet-Manager (104);
- Weiterleiten der Registrierung von dem ersten Applet-Manager (104) zu dem wenigstens ersten Applet (105);
- Senden von wenigstens ersten Steuerdaten (107) von dem wenigstens ersten Applet (105) zu dem ersten Applet-Manager (104);
- Weiterleiten der wenigstens ersten Steuerdaten (107) von dem ersten Applet-Manager (104) zu dem Chipkartenleser (102) zum Vergleich der wenigstens ersten Steuerdaten (107) mit einem ersten Datenereignis (109) in Bezug auf eine digitale Datenrundsendung durch die erste Handapparat-Entität (101);
- Empfangen wenigstens eines Teils des ersten Datenereignisses (110) von der ersten Handapparat-Entität (101) durch den Chipkartenleser (102) zu wenigstens dem ersten Applet-Manager (104), wenn der Teil des ersten Datenereignisses (110) wenigstens den ersten Steuerdaten (107) entspricht;
- Weiterleiten des Teils des ersten Datenereignisses (110) von dem ersten Applet-Manager (104) zu wenigstens dem ersten Applet (105);
- Verarbeiten des Teils des ersten Datenereignisses (110) zum Erzeugen eines ersten Rücksignals (111) durch wenigstens das erste Applet (105);
- Senden eines ersten Rücksignals (111) von wenigstens dem ersten Applet (105) zu dem ersten Applet-Manager (104);
- Weiterleiten des ersten Rücksignals (111) von dem ersten Applet-Manager zu der ersten Handapparat-Entität (101);
- Empfangen einer ersten Antwort (402) von der ersten Handapparat-Entität (101) durch den ersten Applet-Manager (104);
- Übertragen der ersten Antwort (402) von dem ersten Applet-Manager (104) zu dem zweiten Applet-Manager (401) zur Handapparat-Individualisierung.

## Revendications

1. Carte à puce de télécommunication (103) pour transporter des données de personnalisation pour le raccordement à au moins un réseau mobile de télécommunications et comprenant au moins un gestionnaire d'applets (104) et au moins une première applet (105), où la carte à puce (103) comprend en outre un second gestionnaire d'applets (401), la carte à puce de télécommunication (103) comprenant en outre :
- des moyens de réception d'un enregistrement d'une première entité de combiné (101) en provenance d'un lecteur de carte à puce (102) vers le premier gestionnaire d'applets (104) ;
- des moyens de transfert de l'enregistrement depuis le premier gestionnaire d'applets (104) vers l'au moins une première applet (105) ;
- des moyens pour envoyer au moins une première donnée de contrôle (107) depuis l'au moins une première applet (105) vers le premier gestionnaire d'applets (104) ;
- des moyens pour transférer l'au moins une première donnée de contrôle (107) depuis le premier gestionnaire d'applets (104) vers le lecteur de carte à puce (102) pour une comparaison de l'au moins première donnée de contrôle (107) avec un premier événement de données (109) en liaison avec des données numériques transmises par la première entité de combiné (101), où la première entité de combiné (101) est un moyen de rendu pour restituer le premier événement de données ;
- des moyens de réception d'au moins une partie du premier événement de données (110) en provenance de la première entité de combiné (101) par le lecteur de la carte à puce (102) vers au moins le premier gestionnaire d'applets (104), si la partie du premier événement de données (110) correspond à au moins la première donnée de contrôle (107) ;
- des moyens pour transférer la partie du premier événement de données (110) depuis le premier gestionnaire d'applets (104) vers au moins la première applet (105);
- des moyens de traitement de la partie du premier événement de données (110) pour générer un premier signal de retour (111) par au moins la première applet (105) ;
- des moyens d'envoi d'un premier signal de retour (111) depuis au moins la première applet (105) vers le premier gestionnaire d'applets (104) ;
- des moyens d'envoi du premier signal de retour (111) depuis le premier gestionnaire d'applets vers le lecteur de la carte à puce pour être traité par la première entité de combiné (101) ;
- des moyens de réception d'une première réponse (402) de la première entité de combiné (101) en provenance du lecteur de la carte à puce (102) par le premier gestionnaire d'applets (104) ;
- des moyens de transfert de la première réponse (402) vers le second gestionnaire d'applets (401) pour communiquer avec un réseau de communication mobile (501).

2. Carte à puce de télécommunications selon la revendication 1, dans laquelle la carte à puce (103) comprend en outre un second gestionnaire d'applets (401) et :
- des moyens de réception d'une première réponse (402) de la première entité de combiné (101) en provenance du lecteur de carte à puce (102) par le premier gestionnaire d'applets (104) ; et
- des moyens pour le transfert de la première réponse (402) vers le second gestionnaire d'applets (401), le second gestionnaire d'applets (401) étant utilisable pour communiquer avec un ordinateur via une interface physique ou une technologie sans fil de courte portée.

3. Carte à puce de télécommunications selon la revendication 1, dans laquelle la première entité de combiné (608) est un démultiplexeur qui est adapté pour recevoir une émission de données numériques.

4. Carte à puce selon la revendication 1 et la revendication 3, dans laquelle la carte à puce comprend en outre un second gestionnaire d'applets (610) et :
- des moyens de réception d'une première réponse (402) de la première entité de combiné (608) en provenance du lecteur de carte à puce (102) par le premier gestionnaire d'applets (609) ;
- des moyens pour l'utilisation de la première réponse (402) de la première entité de combiné (608) pour la personnalisation du combiné.

5. Combiné comprenant :
- un lecteur de carte à puce (102) pour recevoir une carte à puce de télécommunications (103) selon l'une quelconque des revendications 1 à 4 ;
- un démultiplexeur (301) étant adapté pour traiter un premier événement de données en provenance d'un réseau de transmission unidirectionnelle (601) et connecté au lecteur de carte à puce (102) ;
- un moyen de restitution (101) pour restituer un second événement de données (109) et couplé à un démultiplexeur (301) et connecté au lecteur de la carte à puce (102) ;
- des moyens de séparer par le multiplexeur (301) le premier événement de données dans un second événement de données (109) pour une restitution par les moyens de restitution et une partie du premier événement de données pour la personnalisation du combiné par un premier gestionnaire d'applets (104) dans la carte à puce (103) ;
- des moyens pour envoyer le second événement de données (109) vers les moyens de restitution (101) ;
- des moyens pour envoyer la partie du premier événement de données vers un lecteur de carte à puce (102) pour être traitée par un premier gestionnaire d'applets (104) dans la carte à puce (103).

6. Procédé de traitement de données pour contrôler un combiné, le combiné ayant un lecteur de carte à puce intégré (102) pour recevoir une carte à puce de télécommunications (103), la carte à puce de télécommunications (103) comprenant au moins un premier gestionnaire d'applets (104) et au moins une première applet (105), où la carte à puce (103) comprend en outre un second gestionnaire d'applets (401), le combiné ayant au moins une première entité de combiné (101) qui est adaptée pour recevoir une émission de données numériques, et le combiné comprenant une seconde entité de combiné (301), la seconde entité de combiné étant adaptée pour traiter l'émission des données numériques, et où la première entité de combiné (101) est un moyen de restitution, le procédé comprenant :
- l'enregistrement de l'au moins première entité de combiné (101) vers le premier gestionnaire d'applets (104) ;
- le transfert de l'enregistrement depuis le premier gestionnaire d'applets (104) vers l'au moins une première applet (105) ;
- l'envoi d'une au moins première donnée de contrôle (107) depuis l'au moins une première applet (105) vers le premier gestionnaire d'applets(104) ;
- le transfert de l'au moins première donnée de contrôle (107) depuis l'au moins premier gestionnaire d'applets (104) vers la première entité de combiné (101) ;
- la réception d'un premier événement de données (109) en provenance de la seconde entité de combiné (301) ;
- la comparaison de l'au moins première donnée de contrôle (107) au moins avec le premier événement de données (109) en liaison avec une émission de données numériques par l'entité de combiné (101) ;
- l'envoi d'au moins une partie du premier événement de données (110) depuis la première entité de combiné (101) vers au moins le premier gestionnaire d'applets (104), si la partie du premier événement de données (110) correspond à au moins la première donnée de contrôle (107) ;
- le transfert de la partie du premier événement de données (110) depuis le premier gestionnaire d'applets (104) vers au moins la première applet (105) ;
- le traitement de la partie du premier événement de données (110) pour générer un premier signal de retour (111) par au moins la première applet (105) ;
- l'envoi du premier signal de retour (111) depuis au moins un élément de la première applet (105) vers le premier gestionnaire d'applets (104) ;
- le transfert du premier signal de retour (111) depuis le premier gestionnaire d'applets (104) vers la première entité de combiné (101) ;
- la réception d'une première réponse (402) en provenance de la première entité de combiné (101) par le premier gestionnaire d'applets (104) ;
- le transfert de la première réponse (402) en provenance du premier gestionnaire d'applets (104) vers le second gestionnaire d'applets (401) pour la personnalisation du combiné.

7. Procédé selon la revendication 6, dans lequel la carte à puce comprend en outre un second gestionnaire d'applets (401) et le procédé comprend en outre ;
- la réception d'une première réponse (402) en provenance de la première entité de combiné (101) par le premier gestionnaire d'applets (104) ;
- le transfert de la première réponse (402) vers le second gestionnaire d'applets (401) pour communiquer avec un réseau mobile de télécommunications (501).

8. Procédé selon l'une quelconque des revendications 6 à 7, dans lequel la seconde entité de combiné (301) est un démultiplexeur et dans lequel le second gestionnaire d'applets (401) est couplé avec la seconde entité de combiné (301).

9. Procédé selon l'une quelconque des revendications 6 à 7, dans lequel le premier signal de retour (111) en provenance de la première applet (105) vers le premier gestionnaire d'applets (104) correspond à une description d'une application interactive riche destinée à être affiché sur la première entité de combiné.

10. Procédé selon la revendication 6, dans lequel la première entité de combiné (608) est un multiplexeur qui adapté pour traiter l'émission de données numériques en provenance d'un réseau de transmission unidirectionnel (601).

11. Procédé selon la revendication 10, dans lequel le procédé comprend en outre :
- la séparation des données numériques émises par la première entité de combiné (608) dans une partie d'un premier événement de données (110) pour une personnalisation du combiné par le premier gestionnaire d'applets (609) et un second événement de données (602) pour une restitution par la seconde entité de combiné (611).

12. Procédé selon la revendication 11, dans lequel la carte à puce (103) comprend en outre un second gestionnaire d'applets (610) couplé avec la seconde entité de combiné (611) et le procédé comprend en outre :
- le transfert du premier signal de retour (111) depuis le premier gestionnaire d'applets (609) vers le second gestionnaire d'applets (610) ;
- l'adaptation du premier signal (111) à un format de restitution de la seconde entité de combiné (611).

13. Produit de programme informatique dans une carte à puce (103) de télécommunications pour transporter des données de personnalisation pour une connexion à au moins un réseau mobile de télécommunications et comprenant au moins un gestionnaire d'applets (104) et au moins une première applet (105), la carte à puce de télécommunications comprenant en outre :
- la réception d'un enregistrement d'une première entité de combiné (101) en provenance d'un lecteur de carte à puce (102) vers un premier gestionnaire d'applets (104) ;
- le transfert de l'enregistrement depuis le premier gestionnaire d'applets (104) vers l'au moins une première applet (105) ;
- l'envoi d'au moins une première donnée de contrôle (107) depuis l'au moins une première applet (105) vers le premier gestionnaire d'applets (104) ;
- le transfert de l'au moins une première donnée de contrôle (107) depuis le premier gestionnaire d'applets (104) vers le lecteur de carte à puce (102) pour une comparaison de l'au moins première donnée de contrôle (107) avec un premier événement de données (108) en liaison avec une donnée numérique émise par la première entité de combiné (101) ;
- la réception au moins d'une partie du premier événement de données (110) en provenance de la première entité de combiné (101) par le lecteur de carte à puce (102) vers au moins le premier gestionnaire d'applets (104), si la partie du premier événement de données (110) correspond au moins à la première donnée de contrôle (107) ;
- le transfert de la partie du premier événement de données (110) depuis le premier gestionnaire d'applets (104) vers au moins la première applet (105) ;
- le traitement de la partie du premier événement de données (110) pour générer un premier signal de retour (111) par au moins la première applet (105) ;
- l'envoi d'un premier signal de retour (111) depuis au moins la première applet (105) vers le premier gestionnaire d'applets (104) ;
- le transfert du premier signal de retour (111) depuis le premier gestionnaire d'applets (104) vers la première entité de combiné (101) ;
- la réception d'une première réponse (402) en provenance de la première entité de combiné (101) par le premier gestionnaire d'applets (104) ;
- le transfert de la première réponse (402) depuis le premier gestionnaire d'applets (104) vers le second gestionnaire d'applets (401) pour une personnalisation du combiné.
